# EUROPÄISCHE PATENTSCHRIFT

(11) **EP 3 884 197 B1**
(45) Veröffentlichungstag und Bekanntmachung des Hinweises auf die Patenterteilung: **02.04.2025**
(21) Anmeldenummer: 19808744.7
(22) Anmeldetag: 20.11.2019
(51) Int. Cl.: F16L 37/084, F16L 37/14, F16L 37/02

(54) **KOPPLUNG**
COUPLING
ACCOUPLEMENT

(30) Priorität: 21.11.2018 DE 102018219932
(43) Veröffentlichungstag der Anmeldung: 29.09.2021
(73) Patentinhaber: Fränkische Industrial Pipes GmbH & Co. KG, 97486 Königsberg (DE)
(72) Erfinder: SCHRÖTER, Sören, 96191 Viereth-Trunstadt (DE)
(74) Vertreter: Weickmann & Weickmann PartmbB
(86) Internationale Anmeldenummer: PCT/EP2019/081884
(87) Internationale Veröffentlichungsnummer: WO 2020/104504

(56) Entgegenhaltungen:
- EP-A1- 3 077 718
- DE-A1- 102012 013 305
- DE-A1- 102016 109 051
- US-A- 5 499 848
- US-A1- 2012 211 977
- US-A1- 2017 067 588

## Beschreibung

Die vorliegende Erfindung betrifft eine Kopplung, welche beispielsweise zur Verbindung von Fluidleitungen verwendet wird, um diese Fluidleitungen sicher aneinander zu befestigen.

Werden zwei Fluidleitungen derart miteinander verbunden, dass Fluid von der einen Leitung in die andere Leitung überführt wird, ist es üblich, ein Ende der einen Leitung in ein Ende der anderen Leitung einzuführen. Dabei kommt es immer wieder vor, dass, beispielsweise aufgrund von Reibungseffekten an Dichtungselementen, die beiden zusammengesteckten Enden der Fluidleitungen den Anschein erwecken, korrekt verbunden zu sein, es jedoch nicht sind und sich so im Einsatz voneinander lösen können.

Dokument US 2012/211977 A1, welches als nächstliegender Stand der Technik erachtet wird, offenbart eine Kopplung, bei welcher ein Einsteckelement derart über ein Sicherungselement in einem Aufnahmeelement gesichert werden kann, dass erst auf ein Einführen des Einsteckelements in das Aufnahmeelement eine Verlagerung des Sicherungselements aus einer Freigabestellung in eine Verriegelungsstellung ermöglicht wird. Ferner sei auf die Dokumente EP 3 077 718 A1,

US 2017/067588 A1, DE 10 2016 109051 A1 , DE 10 2012 013305 A1 und US 5 499 848 A hingewiesen.

Der vorliegenden Erfindung liegt daher die Aufgabe zu Grunde, eine Kopplung bereitzustellen, welche eine zuverlässige und sichere Verbindung beispielsweise zweier Fluidleitungen bereitstellt.

Diese Aufgabe wird durch eine Kopplung nach Anspruch 1 gelöst.

Somit kann an der erfindungsgemäßen Kopplung anhand der Stellung des Sicherungselements klar erkannt werden, ob eine mit dem Einsteckelement verbundene Fluidleitung mit einer mit dem Aufnahmeelement verbundenen Fluidleitung korrekt verbunden ist. Durch das Verhindern einer Verlagerung des Sicherungselements aus der Freigabestellung in die Verriegelungsstellung, ohne dass sich das Einsteckelement an einer vordefinierten Position befindet, kann verhindert werden, dass die Kopplung den Anschein einer korrekten Verbindung erweckt, aber dennoch nicht korrekt verbunden ist.

Es sei an dieser Stelle erwähnt, dass unter dem Begriff "getrennt ausgebildetes Halteelement" eine getrennte Ausbildung von Halteelement und Sicherungselement in wenigstens der Verriegelungsstellung des Sicherungselements an dem Aufnahmeelement zu verstehen ist. Es ist nämlich durchaus denkbar, dass das wenigstens eine Halteelement und das Sicherungselement anfangs auch einstückig verbunden sein können und beim ersten Einstecken des Einsteckelements, zum Beispiel durch Lösen einer Sollbruchstelle, getrennt werden.

Die Einführachse kann beispielsweise mit einer Längsmittelachse des Aufnahmeraums und/oder mit einer Längsmittelachse des Einsteckelements zusammenfallend sein.

In einer Ausführungsform der erfindungsgemäßen Kopplung kann das Einsteckelement dazu eingerichtet sein, beim Einführen des Einsteckelements in den Aufnahmeraum des Aufnahmeelements, das wenigstens eine Halteelement zumindest abschnittsweise nach radial außen zu verlagern. Auf diese Weise erhöht sich lediglich die Einschubkraft des Einsteckelements in den Aufnahmeraum des Aufnahmeelements, um einen jeweiligen Abschnitt eines Halteelements zu verlagern, ohne dass hiervon abweichende Handlungen zur Verlagerung des jeweiligen Abschnitts eines Halteelements notwendig wären.

Die Verlagerungsachse des Sicherungselements kann im Wesentlichen rechtwinklig zu der Einführachse des Einsteckelements sein. Daraus kann sich der Vorteile ergeben, dass ein rotatorisch symmetrisch ausgebildetes Einsteckelement in einer beliebigen rotatorischen Ausrichtung in das Aufnahmeelement eingeführt werden kann und dennoch in einer definierten Weise mit dem Sicherungselement in Eingriff treten kann.

**In** einer Weiterbildung der vorliegenden Erfindung kann das Sicherungselement dazu eingerichtet sein, aus einem von dem Aufnahmeelement getrennten Zustand in das mit dem wenigstens einen Halteelement versehenen Aufnahmeelement in die Freigabestellung überführbar zu sein, wobei das Sicherungselement dabei ferner dazu eingerichtet sein kann, das wenigstens eine Halteelement über eine an dem Sicherungselement vorgesehene Einführschräge zu verlagern. Das heißt ein von dem Aufnahmeelement getrennt hergestelltes Sicherungselement kann bei einer Vorbereitung der Kopplung bzw. einem Zusammenbau des Aufnahmeelements mit dem Sicherungselement und dem wenigstens einen Halteelement derart mit dem Aufnahmeelement und dem wenigstens einen Halteelement zusammenwirken, dass das Sicherungselement ohne Verwendung von Werkzeugen in die Freigabestellung an dem Aufnahmeelement gebracht werden kann. Dabei kann die Einführschräge am Sicherungselement das wenigstens eine Halteelement, zum Beispiel im Sinne einer Schnappverbindung nach radial außen, verlagern, um die Freigabestellung zu erreichen. Insbesondere kann der Zusammenbau des Aufnahmeelements mit dem Sicherungselement und dem wenigstens einen Halteelement nur dann ermöglicht sein, wenn kein Einsteckelement in das Aufnahmeelement eingeführt ist.

Vorteilhafterweise können zwei, insbesondere in Bezug auf eine Längsmittelachse des Aufnahmeelements diametral gegenüberliegende, Halteelemente bereitgestellt sein, welche vorteilhafterweise an einem gemeinsamen Trägerelement angeordnet sind. Hierdurch kann das Zusammenwirken von Sicherungselement und Halteelement verstärkt werden, so dass eine Verlagerung des Sicherungselements aus der Freigabestellung in die Verriegelungsstellung bei nicht korrekt verbundener Kopplung auch gegen hohe Kräfte, welche auf das Sicherungselement einwirken und beispielsweise das Zusammenwirken des Sicherungselements mit lediglich einem Halteelement überwinden könnten, gesichert werden kann.

Insbesondere kann das wenigstens eine Halteelement parallel zu der Einführachse mit dem Aufnahmeelement verbindbar sein. Zum Beispiel kann das wenigstens eine Halteelement in eine Ausnehmung, wie beispielsweise einen Schlitz, des Aufnahmeelements einführbar sein und dort mit dem Aufnahmeelement unlösbar, das heißt nicht zerstörungsfrei lösbar, verbindbar sein.

Das Sicherungselement kann als ein geschlossener Ring ausgebildet sein, dessen Durchgangsloch sich in einer zu der Einführachse parallelen Richtung erstreckt, wenn sich das Sicherungselement in der Freigabe- oder der Verriegelungsstellung befindet. So kann bei eingestecktem Einführelement in das Aufnahmeelement das Sicherungselement nicht aus der Verriegelungsstellung über die Freigabestellung hinaus verlagert werden, da das Sicherungselement das Einsteckelement zumindest teilweise umgibt und an diesem anschlägt. Es sei ferner erwähnt, dass der Begriff "Ring" hier nicht "kreisringförmig" bedeuten muss, sondern lediglich, dass eine um ein Durchgangsloch geschlossene Struktur vorliegt. Somit soll der Begriff "Ring" auch polygon, wie beispielsweise rechteckig, umschlossene Durchgangslöcher umfassen.

In einem Zustand, in welchem das Sicherungselement an dem Aufnahmeelement, insbesondere in der Verriegelungsstellung, angeordnet ist, kann ein Freiraum zwischen einem Abschnitt des Sicherungselements und einem dazu in einer Richtung parallel zu der Einführachse benachbarten Abschnitt des Aufnahmeelements angeordnet sein, welcher zum Einführen eines Werkzeugs geeignet ist, um damit das Sicherungselement aus der Verriegelungsstellung in Richtung der Freigabestellung zu verlagern, wobei der an den Freiraum angrenzende Abschnitt des Sicherungselements insbesondere eine zu dem Freiraum weisende Ausnehmung ausweist, welche dazu eingerichtet ist, das Werkzeug aufzunehmen. So kann beispielsweise in den Freiraum ein Schraubendreher eingeführt werden und das Sicherungselement unter Abstützung an dem Aufnahmeelement in Bezug auf das Aufnahmeelement nach radial außen gehebelt werden. Alternativ oder zusätzlich zu der Ausnehmung kann an dem Sicherungselement ein Vorsprung vorgesehen sein, unter welchen das Werkzeug eingreifen kann. So kann der Vorsprung insbesondere an einem radial äußeren Ende des Sicherungselements angeordnet sein. Dabei kann der Vorsprung so in Zusammenwirkung mit dem Freiraum ausgebildet sein, dass das Sicherungselement durch Drehen des Werkzeugs aus der Verriegelungsstellung herausverlagert werden kann. Vorteilhafterweise kann der an den Freiraum angrenzende Abschnitt des Aufnahmeelements dabei zu der Einführachse geneigt verlaufen, so dass ein Werkzeug, welches an einem oberen Ende der dadurch gebildeten Schräge angesetzt wird und zu dem Sicherungselement entlang der Schräge verlagert wird, das Sicherungselement gezielt unter dem Vorsprung erreichen kann.

Ferner kann das Sicherungselement für jedes Halteelement eine radial außen am Sicherungselement angeordnete Ausnehmung aufweisen, welche dazu eingerichtet sein kann, in der Freigabestellung des Sicherungselements, mit einem jeweiligen Halteelement derart in Eingriff zu stehen, dass eine Verlagerung des Sicherungselements entlang der Verlagerungsachse des Sicherungselements in beide Richtungen im Wesentlichen verhindert wird. Wobei "im Wesentlichen" hier bedeutet, dass ein leichtes Spiel, welches herstellungstechnisch nicht zu vermeiden ist, zugelassen sein kann.

Erfindungsgemäß weist jedes Halteelement einen im mit dem Aufnahmeelement verbundenen Zustand sich nach radial innen ersteckenden Vorsprung auf. Der Vorsprung kann mit dem Einsteckelement in Kontakt treten und von diesem nach radial außen gedrängt werden, um das Sicherungselement freizugeben.

Dabei erstreckt sich ein am weitesten nach radial innen erstreckender Abschnitt des Vorsprungs radial weiter nach innen als ein sich am weitesten nach radial innen erstreckender Abschnitt einer Innenwandung des Aufnahmeraums, in welchen sich der Vorsprung hinein erstreckt, aber ist radial weiter außen angeordnet als ein sich am weitesten nach radial innen erstreckender Abschnitt einer Innenwandung des Durchgangslochs des Sicherungselements, durch welches hindurch das Einsteckelement beim Verbinden des Einsteckelements mit dem Aufnahmeelement geführt wird. Daher kann der Vorsprung nur mit einem vorbestimmten Abschnitt des Einsteckelements in Kontakt treten und auf eine definierte Weise verlagert werden. Ferner kann dadurch das Einführen des Einsteckelements erleichtert werden, da bis zum Kontaktieren des Vorsprungs mit dem dafür vorgesehenen Abschnitt des Einsteckelements kein Kontakt zwischen Halteelement und Einsteckelement, welcher ein Einführen des Einsteckelements in den Aufnahmeraum erschweren könnte, besteht.

Das Einsteckelement kann an seinem Außenumfang einen Abschnitt aufweisen, in welchem sich der Außendurchmesser des Einsteckelements ändert, wobei das Sicherungselement ferner einen Sicherungsabschnitt umfasst, welcher dazu eingerichtet ist, in der Verriegelungsstellung des Sicherungselements mit dem Abschnitt mit geändertem Außendurchmesser des Einsteckelements einzugreifen, um eine axiale Verlagerung des Einsteckelements zumindest in einer Richtung, vorzugsweise einer Löserichtung von Einsteckelement und Aufnahmeelement, entlang der Einführachse zu verhindern. Dieses Eingreifen des Sicherungselements mit dem Einsteckelement sichert das Einsteckelement an einer vordefinierten Position relativ zu dem Aufnahmeelement. Auch ein beidseitiges Umgreifen eines Rings am Außenumfang des Einsteckelements ist denkbar, um eine Sicherung des Einsteckelements in beide Achsrichtungen, das heißt in eine Richtung eines weiteren Einführens in den Aufnahmeraum des Aufnahmeelements und in eine Richtung eines Lösens des Einsteckelements von dem Aufnahmeelement, bereitzustellen.

Jedes Halteelement umfasst erfindungsgemäß einen sich parallel zu der Einführachse erstreckenden und in einer radialen Richtung in Bezug auf die Einführachse federnden Arm. Somit ist auf einfache Weise eine Verlagerbarkeit des Halteelements, insbesondere des Vorsprungs des Halteelements, bereitgestellt.

Ferner kann die Kopplung eine zwischen dem Aufnahmeelement und dem Sicherungselement wirkende Verrastungseinrichtung umfassen. Die Verrastungseinrichtung weist beispielsweise zwei Verrastungsstellungen auf, welche der Verriegelungsstellung bzw. der Freigabestellung des Sicherungselements am Aufnahmeelement entsprechen. Eine korrekte Verrastung dieser Verrastungseinrichtung stellt eine weitere Kontrollmöglichkeit für eine korrekte Positionierung des Sicherungselements am Aufnahmeelement bereit. Ferner kann dadurch eine ungewollte Verlagerung des Sicherungselements aus der Verriegelungsstellung in die Freigabestellung weiter verhindert werden.

In einer vorteilhaften Ausführungsform der vorliegenden Erfindung kann die Verrastungseinrichtung eine, beispielsweise als von dem Aufnahmeelement gesonderte Komponente oder als ein mit dem Aufnahmeelement integraler Abschnitt und aus Metall oder Kunststoff gefertigt ausgebildete, Blattfeder umfassen, welche beispielsweise an einer Außenseite des Aufnahmeelements angeordnet sein kann. Die Blattfeder kann mit einem am Sicherungselement vorbestimmten Abschnitt, zum Beispiel einer Ausnehmung, in Eingriff treten, um eine Verlagerung des Sicherungselements aus der Verriegelungsstellung zu verhindern. Um das Sicherungselement aus der Verriegelungsstellung lösen zu können, kann es erforderlich sein, die Blattfeder, zum Beispiel durch Drücken auf einen von dem oben beschriebenen Eingriffsabschnitt getrennten Abschnitt der Blattfeder mit z.B. einem Finger, aus dem Eingriff mit dem Sicherungselement heraus zu verlagern. Es ist dabei ebenfalls denkbar, dass die Blattfeder in einer analogen Weise verlagert werden muss, um die Verriegelungsstellung des Sicherungselements an dem Aufnahmeelement zu erreichen. Ein Aufnahmeabschnitt des Aufnahmeelements für die Blattfeder kann dabei derart ausgebildet sein, dass eine ungewollte Betätigung der Blattfeder verhindert oder zumindest deutlich reduziert wird. Dies kann zum Beispiel durch Vorsehen von den Aufnahmeabschnitt für die Blattfeder zumindest teilweise umgebenden Vorsprüngen erreicht werden.

Der Aufnahmeraum des Aufnahmeelements kann in einen ersten Aufnahmeraum und einen zweiten Aufnahmeraum unterteilt sein, wobei das Sicherungselement in seiner Verriegelungsstellung und seiner Freigabestellung, in einer Richtung entlang der Einführachse gesehen, zwischen dem ersten und dem zweiten Aufnahmeraum angeordnet ist. Der erste Aufnahmeraum kann dabei derjenige Aufnahmeraum sein, in welchen das Einsteckelement zuerst eingeführt wird. Der erste Aufnahmeraum kann einen im Vergleich zum zweiten Aufnahmeraum größeren Durchmesser einer Innenwandung aufweisen, wobei sich der Vorsprung des wenigstens einen Halteelements in den ersten Aufnahmeraum erstrecken kann. Ein Ring des Einsteckelements kann beispielsweise nur in den ersten Aufnahmeraum passen, aber nicht in den zweiten Aufnahmeraum. Eine Längsmittelachse des ersten Aufnahmeraums kann vorteilhafterweise koaxial zu einer Längsmittelachse des zweiten Aufnahmeraums sein.

Dabei kann ein kleinster radialer Abstand eines Abschnitts des Sicherungselements in seiner Freigabestellung zu einer verlängerten Längsmittelachse des zweiten Aufnahmeraums größer oder gleich einem kleinsten radialen Abstand eines Abschnitts einer Innenwandung des zweiten Aufnahmeraums zu der Längsmittelachse des zweiten Aufnahmeraums sein, jedoch ein kleinster radialer Abstand eines Abschnitts des Sicherungselements in seiner Freigabestellung zu einer verlängerten Längsmittelachse des ersten Aufnahmeraums kleiner oder gleich einem kleinsten radialen Abstand eines Abschnitts einer Innenwandung des ersten Aufnahmeraums zu der Längsmittelachse des ersten Aufnahmeraums sein. Das Einsteckelement kann somit mit einem vorderen, radial kleineren Abschnitt durch das Sicherungselement hindurch in den zweiten Aufnahmeraum passen, aber mit einem radial größeren Abschnitt, z.B. einem Ring am Außenumfang, welcher in den ersten Aufnahmeraum passt, am Sicherungselement anschlagen. Das Einsteckelement kann dadurch eine vordefinierte Position annehmen, in welcher es nicht weiter in den Aufnahmeraum des Aufnahmeelements hinein verlagert werden kann, so dass das Sicherungselement zuverlässig mit dem Einsteckelement eingreifen und dieses axial sichern kann.

Im Folgenden wird die vorliegende Erfindung anhand eines Ausführungsbeispiels mit Bezug auf die begleitenden Zeichnungen in größerem Detail beschrieben werden. Es stellt dar:
- Figur 1: eine perspektivische Explosionsansicht einer Ausführungsform einer erfindungsgemäßen Kopplung;
- Figur 2a: eine Seitenquerschnittsansicht der Ausführungsform aus Figur 1 ohne eingeführtes Einsteckelement;
- Figur 2b: eine weitere Seitenquerschnittsansicht der Ausführungsform aus Figur 1 ohne eingeführtes Einsteckelement;
- Figur 3a: eine Seitenquerschnittsansicht der Ausführungsform aus Figur 1 mit eingeführtem Einsteckelement;
- Figur 3b: eine weitere Seitenquerschnittsansicht der Ausführungsform aus Figur 1 mit eingeführtem Einsteckelement;
- Figur 4: eine Schnittansicht der Ausführungsform aus Figur 1, welche eine Verrastungseinrichtung des Sicherungselements mit dem Aufnahmeelement zeigt;
- Figur 5: eine perspektivische Explosionsansicht einer weiteren Ausführungsform einer erfindungsgemäßen Kopplung;
- Figur 6: eine Seitenquerschnittsansicht der weiteren Ausführungsform der erfindungsgemäßen Kopplung aus Figur 5, welche entlang der Linie VI-VI in Figur 7 genommen worden ist; und
- Figur 7: eine weitere Seitenquerschnittsansicht der weiteren Ausführungsform der erfindungsgemäßen Kopplung aus Figur 5, welche entlang der Linie VII-VII in Figur 6 genommen worden ist.

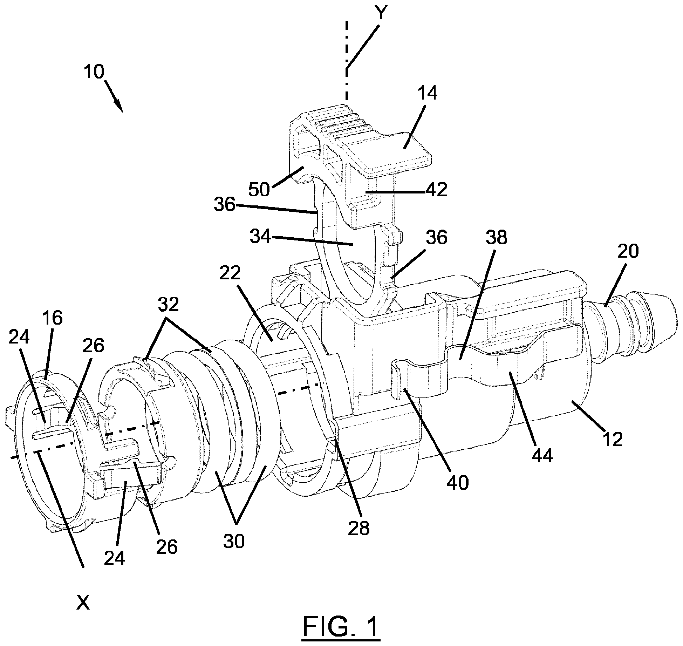

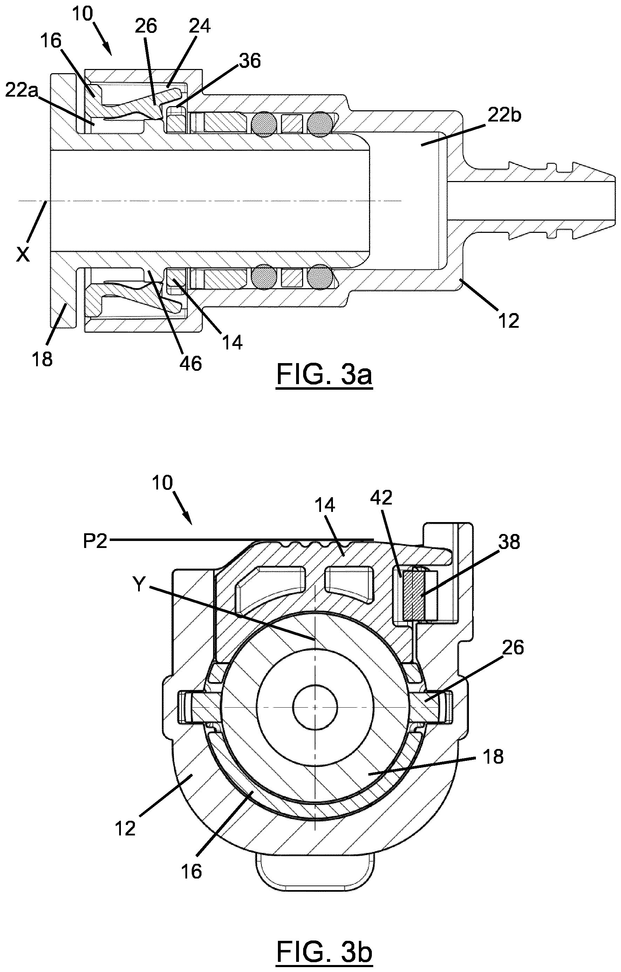

In Figur 1 ist eine erfindungsgemäße Kopplung allgemein mit dem Bezugszeichen 10 bezeichnet. Die Kopplung 10 umfasst ein Aufnahmeelement 12, ein Sicherungselement 14, ein Halteelement 16 und ein Einsteckelement 18 (siehe Figur 3a).

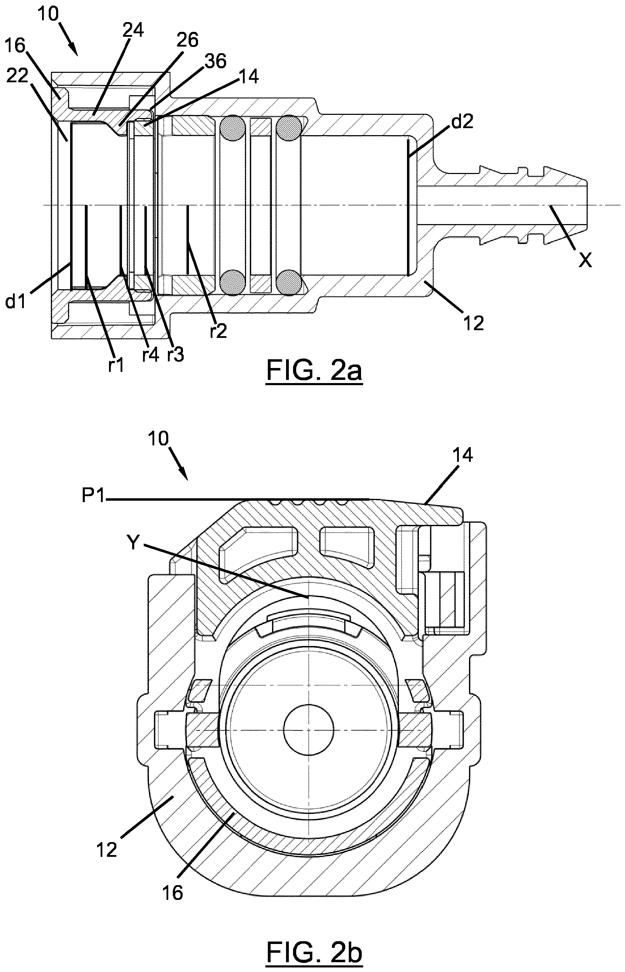

Das Aufnahmeelement 12 weist an seinem in Figur 1 rechts dargestellten Ende einen Flansch 20 auf, welcher dazu eingerichtet ist, mit einer Fluidleitung verbindbar zu sein. An seinem dem Flansch 20 gegenüberliegenden Ende weist das Aufnahmeelement 12 einen Aufnahmeraum 22 auf, in welchen das Einsteckelement 18 einführbar ist (siehe Figuren 2a und 3a).

Das Halteelement 16 ist hier als Ring ausgeführt, an welchem diametral gegenüberliegend zwei radial federnde Haltearme 24 angeordnet sind. Jeder der Haltearme 24 weist einen sich nach radial innen erstreckenden Vorsprung 26 auf. Die Haltearme 24 werden in dem Aufnahmeelement 12 in dafür vorgesehenen Ausnehmungen 28 aufgenommen. Im Fall des ringförmig ausgebildeten Halteelements 16 kann, bei mit dem Aufnahmeelement 12 verbundenem Halteelement 16, der Aufnahmeraum 22 auch als durch die Durchgangsöffnung des Halteelements 16 definiert erachtet werden.

In dem in Figur 1 dargestellten Ausführungsbeispiel werden das Halteelement 16 sowie zwei O-Ringe 30 und zwei Abstandshalter 32 mit dem Aufnahmeelement 12 entlang einer Einführachse X verbunden, welche hier zugleich eine Längsmittelachse X des Aufnahmeelements 12 bzw. des Aufnahmeraums 22 bildet.

Das Sicherungselement 14 ist in Figur 1 in einer von dem Aufnahmeelement 12 gelösten Position dargestellt und kann entlang einer Verlagerungsachse Y in das Aufnahmeelement 12 eingeführt werden. Die Verlagerungsachse Y ist in dem hier dargestellten Ausführungsbeispiel orthogonal zu der Einführachse X. Das Sicherungselement 14 weist ein Durchgangsloch 34 auf, in welches das Einsteckelement 18 einführbar ist und welches hier vollständig von dem Sicherungselement 14 umschlossen ist. An zwei diametral gegenüberliegenden Abschnitten weist das Sicherungselement 14 an seiner Außenseite zwei Ausnehmungen 36 auf, welche dazu eingerichtet sind, mit den Haltearmen 24 in einer Freigabestellung P1 (siehe Figur 2b) in Eingriff zu treten.

An dem Aufnahmeelement 12 ist ferner eine Blattfeder 38 angeordnet, welche einen Endabschnitt 40 aufweist, welcher dazu eingerichtet ist, mit einer Ausnehmung 42 des Sicherungselements 14 in Eingriff zu treten, um eine Verlagerung des Sicherungselements 14 relativ zu dem Aufnahmeelement 12 in einer Verriegelungsstellung P2 (siehe Figur 3b) zu verhindern. Die Blattfeder 38 weist ferner einen Betätigungsabschnitt 44 auf, welcher hier als wenigstens eine Biegung der Blattfeder derart ausgebildet ist, dass eine Verlagerung des Betätigungsabschnitts 44 auf das Aufnahmeelement 12 zu eine Verlagerung des Endabschnitts 40 der Blattfeder 38 aus der Ausnehmung 42 des Sicherungselements 14 hervorruft.

In Figur 2a ist eine Seitenquerschnittsansicht der in Figur 1 dargestellten Ausführungsformen einer erfindungsgemäßen Kopplung 10 im zusammengebauten Zustand, mit Ausnahme des Einsteckelements 18, dargestellt. Dabei ist zu erkennen, dass die federnden Haltearme 24 mit den Ausnehmungen 36 im Eingriff stehen, wodurch eine Verlagerung des Sicherungselements 14 aus der in Figur 2b gezeigten Freigabestellung P1 relativ zu dem Aufnahmeelement 12 verhindert wird.

Figur 3a zeigt eine zu Figur 2a analoge Schnittansicht, wobei das Einsteckelement 18 in den Aufnahmeraum 22 des Aufnahmeelements 12 eingeführt ist. Ein ringförmig vorstehender Abschnitt 46 des Einsteckelements 18 ist hier mit den Vorsprüngen 26 der federnden Haltearme 24 des Halteelements 16 in Kontakt getreten und hat die federnden Haltearme 24 nach radial außen verlagert. Der ringförmige Vorsprung 46 des Einsteckelements 18 befindet sich in einem ersten Aufnahmeraum 22a, wohingegen ein vorderer Endabschnitt des Einsteckelements 18 durch das Sicherungselement 14 hindurch in einen zweiten Aufnahmeraum 22b eingeführt ist, welcher einen im Vergleich zu einem Innendurchmesser d1 des ersten Aufnahmeraums 22a kleineren Innendurchmesser d2 aufweist, so dass das Einsteckelement 18 in den Aufnahmeraum 22 eingeführt werden kann, bis der ringförmige Vorsprung 46 an dem Sicherungselement 14 anschlägt. In anderen Worten weist der erste Aufnahmeraum 22a einen kleinsten radialen Abstand r1 von der Längsmittelachse X auf, der zweite Aufnahmeraum 22b weist einen kleinsten radialen Abstand r2 von der Längsmittelachse X auf und die das Durchgangsloch 34 des Sicherungselements 14 umgebende Wandung weist einen kleinsten radialen Abstand r3 von der Längsmittelachse X auf. Die Vorsprünge 26 ragen im unverlagerten Zustand, d.h. ohne eingeführtes Einsteckelement, bis zu einem radialen Abstand r4 von der Längsmittelachse X in den ersten Aufnahmeraum 22a hinein.

Die federnden Haltearme 24 sind in Figur 3a außer Eingriff mit den Ausnehmungen 36 des Sicherungselements 14 getreten, so dass eine Verlagerung des Sicherungselements 14 aus der Freigabestellung P1 gemäß Figur 2b in eine Verriegelungsstellung P2 gemäß Figur 3b durchgeführt werden kann.

In der in Figur 3b dargestellten Verriegelungsstellung P2 wird der ringförmige Vorsprung 46 des Einsteckelements 18 von einem Verriegelungsabschnitt 50 des Sicherungselements 14 teilweise umgriffen, so dass eine Verlagerung des Einsteckelements entlang der Achse X verhindert wird. Natürlich ist es denkbar, hierbei zusätzlich eine Rotationssicherung des Einsteckelements 18 relativ zu dem Sicherungselement 14 bzw. dem Aufnahmeelement 12 vorzusehen. In der Verriegelungsstellung P2 greift, bei unbetätigter Blattfeder 38, der Endabschnitt 40 der Blattfeder 38 in die entsprechende Ausnehmung 42 des Sicherungselements 14 ein.

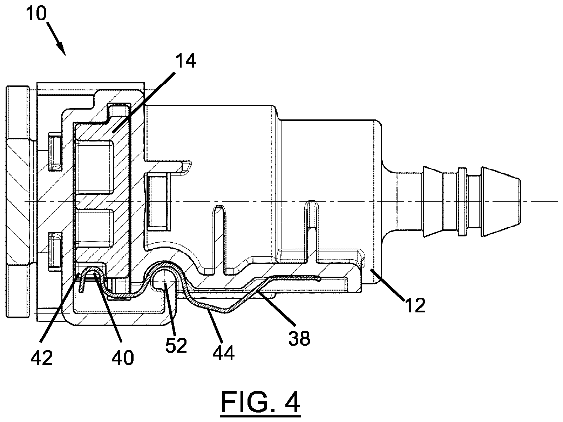

In Figur 4 ist eine Schnittansicht dargestellt, welche das Zusammenwirken der Blattfeder 38 mit dem Aufnahmeelement 12 bzw. dem Sicherungselement 14 detailliert darstellt. Dabei ist zu erkennen, dass eine Verlagerung des Betätigungsabschnitts 44 der Blattfeder 38 auf das Aufnahmeelement 12 zu eine Verlagerung des eines dem Endabschnitt 40 der Blattfeder 38 entgegengesetzten Endes der Blattfeder 38, in der Darstellung gemäß Figur 4 nach rechts, hervorruft, wodurch eine Rotation des Endabschnitts 40 der Blattfeder 38 in einem und entlang eines Aufnahmeabschnitts 52 des Aufnahmeelements 12, in welchem die Blattfeder 38 gelagert ist, hervorgerufen wird, so dass der Endabschnitt 40 aus der Ausnehmung 42 des Sicherungselements 14 heraus verlagert wird.

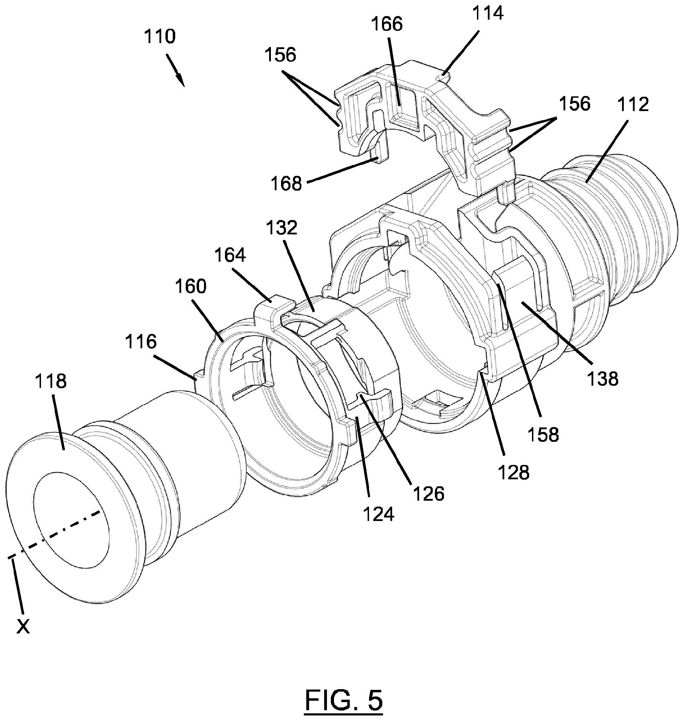

In Figur 5 ist nun eine weitere Ausführungsform 110 einer erfindungsgemäßen Kopplung gezeigt, wobei im Folgenden maßgeblich auf die Unterschiede der Ausführungsform 110 zu der oben beschriebenen Kopplung 10 eingegangen werden soll. Aus diesem Grund werden bei der Beschreibung der Kopplung 110 zu der Kopplung 10 ähnliche Komponenten mit gleichen Bezugszeichen bezeichnet, jedoch vermehrt um die Zahl 100. Soweit anwendbar, können sämtliche in Bezug auf die Kopplung 10 beschriebene Merkmale, Effekte und Vorteile auch auf die Kopplung 110 Anwendung finden, und umgekehrt.

Die Kopplung 110 umfasst ein Aufnahmeelement 112, ein Sicherungselement 114, ein Halteelement 116 sowie ein Einsteckelement 118.

Das Sicherungselement 114 ist in seinem mit dem Aufnahmeelement 112 verbundenen Zustand, das heißt der Freigabestellung P1 bzw. der Verriegelungsstellung P2, mit dem Aufnahmeelement 112 über einen Rastmechanismus 138 verbunden. Dabei kann das Sicherungselement 114 wenigstens ein Paar (bzw. wie in der in Figur 5 dargestellten Ausführungsform zwei Paare) von Vertiefungen 156 aufweisen. Die Vertiefungen 156 sind dazu eingerichtet, mit einem federnd gelagerten Rastvorsprung 158, welcher an dem Aufnahmeelement 112 angeordnet ist, in Eingriff zu treten. Dabei sind die in Figur 5 unten angeordneten Vertiefungen 156 des Paares von Vertiefungen 156 der Freigabestellung P1 des Sicherungselements 114 an dem Aufnahmeelement 112 und die darüber angeordneten Vertiefungen 156 der Verriegelungsstellung P2 zugeordnet. Dabei kann ein Abstand einer Mitte einer oberen Vertiefung 156 zu einer Mitte einer unteren Vertiefung 156, das heißt ein "Hub" des Sicherungselements 114 aus der Freigabestellung P1 in die Verriegelungsstellung P2, etwa 3 mm betragen.

Das Sicherungselement 114 kann hier in zwei senkrecht zueinander angeordneten Schnittebenen im Wesentlichen U-förmig ausgebildet sein, so dass das Sicherungselement 114 lediglich in einer einzigen Orientierung relativ zu dem Aufnahmeelement 112 mit diesem in Eingriff gebracht werden kann.

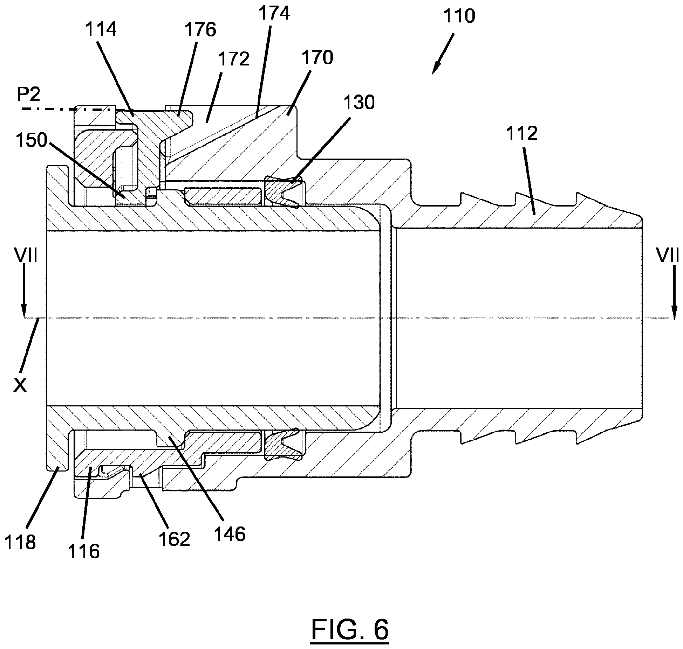

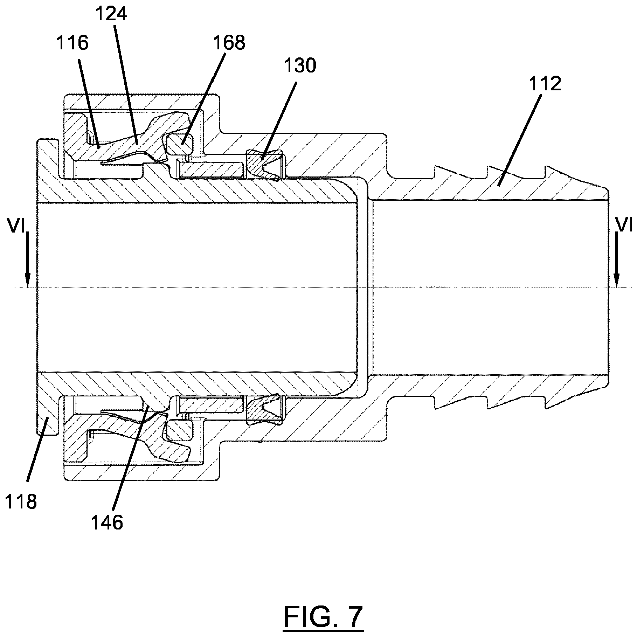

Ist das Sicherungselement 114 nun in der Freigabestellung P1 mit dem Aufnahmeelement 112 verbunden, kann das Halteelement 116 in das Aufnahmeelement 112 eingeführt werden. Das Halteelement 116 ist in der in Figur 5 dargestellten Ausführungsform einstückig mit einem ringförmig ausgebildeten Abstandshalter 132 ausgebildet, welcher dazu eingerichtet ist, ein Dichtungselement 130 (siehe Figuren 6 und 7) in einer vorbestimmten Position nach dessen Einführen in das Aufnahmeelement 112 zu halten. Der Abstandshalter 132 ist über Stege mit einem ringförmigen Abschnitt 160 des Halteelements 116 verbunden, dessen Innendurchmesser größer ist als der Innendurchmesser des Abstandshalters 132.

Der ringförmige Abschnitt 160 des Halteelements 116 ist mit wenigstens einem Haltearm 124 (in der dargestellten Ausführungsform ist ferner dem dargestellten Haltearm 124 diametral ein zweiter Haltearm 124 entgegengesetzt (siehe Figur 7)) derart verbunden, dass ein an dem Haltearm 124 angeordneter Vorsprung 126 relativ zu dem ringförmigen Abschnitt 160 des Halteelements 116 federnd gelagert ist. Beim Einführen des Halteelements 116 in das Aufnahmeelement 112 greifen die Haltearme 124 in an dem Aufnahmeelement 112 vorgesehene Ausnehmungen 128 ein. Hierdurch kann eine Rotation des Halteelements 116 relativ zu dem Aufnahmeelement 112 verhindert werden. In der korrekt an dem Aufnahmeelement 112 angeordneten Position des Halteelements 116 kann eine Rastnase 162 des Halteelements 116 mit einer entsprechenden Ausnehmung, welche an dem Aufnahmeelement 112 gebildet ist, eingreifen, um eine Verlagerung des Halteelements 116 entlang der Einführachse X entgegen der Einführrichtung in das Aufnahmeelement 112 zu verhindern.

Das Halteelement 116 umfasst hier ferner einen sich von dem ringförmigen Abschnitt 160 in Richtung des Abstandhalters 132 des Halteelements 116 erstreckenden Ansatz 164, welcher im verbundenen Zustand des Halteelements 116 mit dem Aufnahmeelement 112 in eine Aussparung 166 des Sicherungselements 114 eingreift, wodurch eine Verlagerung des Sicherungselements 114 aus der Freigabestellung P1 nach radial außen, das heißt ein Lösen des Sicherungselements 114 von dem Aufnahmeelement 112 über die Freigabestellung P1 hinaus, verhindert werden kann.

An dem Sicherungselement 114 sind hier zwei Zapfen 168 angeordnet, welche dazu eingerichtet sind, auf eine Kraft hin, welche das Sicherungselement 114 aus der Freigabestellung P1 in Richtung der Verriegelungsstellung P2 drängt, ohne dass das Einsteckelement 118 korrekt eingeführt ist, gegen die Haltearme 124 des Halteelements 116 anzuliegen, um verhindern zu können, dass das Sicherungselement 114 die Verriegelungsstellung P2 erreicht, bevor das Einsteckelement 118 korrekt eingeführt worden ist.

Das Einsteckelement 118 wird nun in Figuren 6 und 7 bis zu einem Anschlag in das Aufnahmeelement 112 eingeführt, welcher beispielsweise durch Zusammenwirken eines ringförmig vorstehenden Abschnitts 146 des Einsteckelements 118 mit einem Abschnitt des Halteelements 116, insbesondere dem den Abstandshalter 132 bildenden Abschnitt des Halteelements 116, und/oder mit den Haltearmen 124, insbesondere durch Verlagerung dieser in Kontakt mit dem Aufnahmeelement 112, gebildet sein kann (siehe Figur 7). Dabei werden die Haltearme 124 von dem ringförmigen Vorsprung 146 des Einsteckelements 118 derart nach radial außen verlagert, dass die Zapfen 168 des Sicherungselements 114 an den Haltearmen 124 vorbei verlagert werden können, das heißt dass das Sicherungselement 114 aus der Freigabestellung P1 in die Verriegelungsstellung P2 verlagert werden kann, wie dies in Figur 6 gezeigt ist.

In der Verriegelungsstellung P2 hintergreift ein Sicherungsabschnitt 150 des Sicherungselements 114 den ringförmigen Vorsprung 146 des Einsteckelements 118, um eine Verlagerung des Einsteckelements 118 entlang der Einführachse X entgegen der Einführrichtung des Einsteckelements 118 in das Aufnahmeelement 112 verhindern zu können.

In Figur 6 ist ferner zu erkennen, dass zwischen dem Sicherungselement 114 und einem Abschnitt 170 des Aufnahmeelements 112 ein Freiraum 172 ausgebildet ist. Der Freiraum 172 ist dazu eingerichtet, ein Einführen eines Werkzeugs, wie beispielsweise eines Schraubendrehers, zu erlauben, um ein Verlagern des Sicherungselements 114 aus der Verriegelungsstellung P2 in Richtung der Freigabestellung P1 zu ermöglichen. Dabei kann das Werkzeug an dem Abschnitt 170 des Aufnahmeelements 112 abgestützt werden, um das Sicherungselement 114 in der in Figur 6 gezeigten Ansicht, beispielsweise durch Drehen des Werkzeugs, nach oben hebeln zu können. Damit das Werkzeug zielsicher zu einer vorbestimmten Stelle des Sicherungselements 114 geführt werden kann, ist der Abschnitt 170 des Aufnahmeelements 112 mit einer Schräge 174 ausgebildet, an welcher das Werkzeug entlang gleiten kann. Um einen besseren Eingriff des Werkzeugs an dem Sicherungselement 114 zu gewährleisten, ist das Sicherungselement 114 mit einem zu dem Freiraum 172 weisenden Vorsprung 176 versehen.

## Patentansprüche

1. Kopplung (10, 110), umfassend
ein Aufnahmeelement (12, 112),
ein Sicherungselement (14, 114),
wenigstens ein getrennt von dem Sicherungselement (14, 114) ausgebildetes Halteelement (16, 116), und
ein Einsteckelement (18, 118),
wobei das Einsteckelement (18, 118) in einen Aufnahmeraum (22) des Aufnahmeelements (12, 112) entlang einer Einführachse (X) einführbar ist,
wobei das Sicherungselement (14, 114) dazu eingerichtet ist, zwischen einer Freigabestellung (P1) und einer Verriegelungsstellung (P2) entlang einer Verlagerungsachse (Y) verlagerbar zu sein,
wobei das Sicherungselement (14, 114) dazu eingerichtet ist, in seiner Freigabestellung (P1), ohne in den Aufnahmeraum (22) des Aufnahmeelements (12, 112) eingeführtes Einsteckelement (18, 118), derart mit dem wenigstens einen Halteelement (16, 116) in Eingriff zu stehen, dass eine Verlagerung des Sicherungselements (14, 114) aus der Freigabestellung (P1) in Richtung der Verriegelungsstellung (P2) verhindert wird,
wobei das Einsteckelement (18, 118) dazu eingerichtet ist, beim Einführen des Einsteckelements (18, 118) in den Aufnahmeraum (22) des Aufnahmeelements (12, 112), mit dem wenigstens einen Halteelement (16, 116) derart wechselzuwirken, dass eine Verlagerung des Sicherungselements (14, 114) aus der Freigabestellung (P1) in die Verriegelungsstellung (P2) ermöglicht wird,
wobei jedes Halteelement (16, 116) einen sich parallel zu der Einführachse (X) erstreckenden und in einer radialen Richtung in Bezug auf die Einführachse (X) federnden Haltearm (24, 124) umfasst, und
wobei jedes Halteelement (16, 116) einen sich im mit dem Aufnahmeelement (12, 112) verbundenen Zustand nach radial innen ersteckenden Vorsprung (26, 126) aufweist,
**dadurch gekennzeichnet, dass** sich ein am weitesten nach radial innen erstreckender Abschnitt des Vorsprungs (26, 126) radial weiter nach innen erstreckt als ein sich am weitesten nach radial innen erstreckender Abschnitt einer Innenwandung des Aufnahmeraums (22), in welchen sich der Vorsprung (26, 126) hinein erstreckt, aber radial weiter außen angeordnet ist als ein sich am weitesten nach radial innen erstreckender Abschnitt einer Innenwandung eines Durchgangslochs (34) des Sicherungselements (14, 114), durch welches hindurch das Einsteckelement (18, 118) beim Verbinden des Einsteckelements (18, 118) mit dem Aufnahmeelement (12, 112) geführt wird.

2. Kopplung (10, 110) nach Anspruch 1,
**dadurch gekennzeichnet, dass** das Einsteckelement (18, 118) dazu eingerichtet ist, beim Einführen des Einsteckelements (18, 118) in den Aufnahmeraum (22) des Aufnahmeelements (12, 112), das wenigstens eine Halteelement (16, 116) zumindest abschnittsweise nach radial außen zu verlagern.

3. Kopplung (10, 110) nach Anspruch 1 oder 2,
**dadurch gekennzeichnet, dass** die Verlagerungsachse (Y) des Sicherungselements (14, 114) im Wesentlichen rechtwinklig zu der Einführachse (X) des Einsteckelements (18, 118) ist.

4. Kopplung (10) nach einem der Ansprüche 1 bis 3,
**dadurch gekennzeichnet, dass** das Sicherungselement (14) dazu eingerichtet ist, aus einem von dem Aufnahmeelement (12) getrennten Zustand in das mit dem wenigstens einen Halteelement (16) versehenen Aufnahmeelement (12) in die Freigabestellung (P1) überführbar zu sein, wobei das Sicherungselement (14) dabei ferner dazu eingerichtet ist, das wenigstens eine Halteelement (16) über eine an dem Sicherungselement (14) vorgesehene Einführschräge zu verlagern.

5. Kopplung (10, 110) nach einem der Ansprüche 1 bis 4,
**dadurch gekennzeichnet, dass** zwei, insbesondere in Bezug auf eine Längsmittelachse (X) des Aufnahmeelements (12, 112) diametral gegenüberliegende, Haltearme (24, 124) bereitgestellt sind, welche vorteilhafterweise an einem gemeinsamen Trägerelement angeordnet sind.

6. Kopplung (10, 110) nach einem der Ansprüche 1 bis 5,
**dadurch gekennzeichnet, dass** das wenigstens eine Halteelement (16, 116) parallel zu der Einführachse (X) mit dem Aufnahmeelement (12, 112) verbindbar ist.

7. Kopplung (110) nach einem der Ansprüche 1 bis 6,
**dadurch gekennzeichnet, dass** in einem Zustand, in welchem das Sicherungselement (114) an dem Aufnahmeelement (112), insbesondere in der Verriegelungsstellung (P2), angeordnet ist, ein Freiraum (172) zwischen einem Abschnitt des Sicherungselements (114) und einem in einer Richtung parallel zu der Einführachse (X) benachbarten Abschnitt (170) des Aufnahmeelements (112) angeordnet ist, welcher zum Einführen eines Werkzeugs geeignet ist, um damit das Sicherungselement (114) aus der Verriegelungsstellung (P2) in die Freigabestellung (P1) zu verlagern, wobei der an den Freiraum (172) angrenzende Abschnitt des Sicherungselements (114) insbesondere eine zu dem Freiraum (172) weisende Ausnehmung (174) ausweist, welche dazu eingerichtet ist, das Werkzeug aufzunehmen.

8. Kopplung (10) nach einem der Ansprüche 1 bis 7,
**dadurch gekennzeichnet, dass** das Sicherungselement (14) für jedes Halteelement (16) eine radial außen am Sicherungselement (14) angeordnete Ausnehmung (36) aufweist, welche dazu eingerichtet ist, in der Freigabestellung (P1) des Sicherungselements (14), mit dem jeweiligen Halteelement (16) derart in Eingriff zu stehen, dass eine Verlagerung des Sicherungselements (14) entlang der Verlagerungsachse (Y) des Sicherungselements (14) in beide Richtungen im Wesentlichen verhindert wird.

9. Kopplung (10, 110) nach einem der Ansprüche 1 bis 8,
**dadurch gekennzeichnet, dass** das Einsteckelement (18, 118) an seinem Außenumfang einen Abschnitt (46, 146) aufweist, in welchem sich der Außendurchmesser des Einsteckelements (18, 118) ändert, wobei das Sicherungselement (14, 114) ferner einen Sicherungsabschnitt (50, 150) umfasst, welcher dazu eingerichtet ist, in der Verriegelungsstellung (P2) des Sicherungselements (14, 114) mit dem Abschnitt mit geändertem Außendurchmesser des Einsteckelements (18, 118) einzugreifen, um eine axiale Verlagerung des Einsteckelements (18, 118) zumindest in einer Richtung, vorzugsweise einer Löserichtung von Einsteckelement (18, 118) und Aufnahmeelement (12, 112), entlang der Einführachse (X) zu verhindern.

10. Kopplung (10, 110) nach einem der Ansprüche 1 bis 9,
**dadurch gekennzeichnet, dass** die Kopplung (10, 110) ferner eine zwischen dem Aufnahmeelement (12, 112) und dem Sicherungselement (14, 114) wirkende Verrastungseinrichtung (38, 138) umfasst.

11. Kopplung (10, 110) nach einem der Ansprüche 1 bis 10,
**dadurch gekennzeichnet, dass** der Aufnahmeraum (22) des Aufnahmeelements (12, 112) in einen ersten Aufnahmeraum (22a) und einen zweiten Aufnahmeraum (22b) unterteilt ist, wobei das Sicherungselement (14, 114) in seiner Verriegelungsstellung (P2) und seiner Freigabestellung (P1), in einer Richtung entlang der Einführachse (X) gesehen, zwischen dem ersten (22a) und dem zweiten (22b) Aufnahmeraum angeordnet ist.

12. Kopplung (10, 110) nach Anspruch 11,
**dadurch gekennzeichnet, dass** ein kleinster radialer Abstand (r3) eines Abschnitts des Sicherungselements (14, 114) in seiner Freigabestellung (P1) zu einer verlängerten Längsmittelachse (X) des zweiten Aufnahmeraums (22b) größer oder gleich einem kleinsten radialen Abstand (r2) eines Abschnitts einer Innenwandung des zweiten Aufnahmeraums (22b) zu der Längsmittelachse (X) des zweiten Aufnahmeraums (22b) ist, jedoch ein kleinster radialer Abstand (r2) eines Abschnitts des Sicherungselements (14, 114) in seiner Freigabestellung (P1) zu einer verlängerten Längsmittelachse (X) des ersten Aufnahmeraums (22a) kleiner oder gleich einem kleinsten radialen Abstand (r1) eines Abschnitts einer Innenwandung des ersten Aufnahmeraums (22a) zu der Längsmittelachse (X) des ersten Aufnahmeraums (22a) ist.

## Claims

1. Coupling (10, 110), comprising
a receiving element (12, 112),
a securing element (14, 114),
at least one retaining element (16, 116) formed separately from the securing element (14, 114), and
an insertion element (18, 118),
wherein the insertion element (18, 118) is insertable into a receiving space (22) of the receiving element (12, 112) along an insertion axis (X),
wherein the securing element (14, 114) is adapted to be displaceable along a displacement axis (Y) between a release position (P1) and a locking position (P2), wherein the securing element (14, 114) is adapted to engage with the at least one retaining element (16, 116) in its release position (P1), without an insertion element (18, 118) inserted into the receiving space (22) of the receiving element (12, 112), in such a way that a displacement of the securing element (14, 114) from the release position (P1) in a direction of the locking position (P2) is prevented,
wherein the insertion element (18, 118) is adapted to interact with the at least one retaining element (16, 116) when the insertion element (18, 118) is inserted into the receiving space (22) of the receiving element (12, 112), in such a way that a displacement of the securing element (14, 114) from the release position (P1) into the locking position (P2) is enabled,
wherein each retaining element (16, 116) includes a retaining arm (24, 124) extending parallel to the insertion axis (X), the retaining arm being resilient in a radial direction with respect to the insertion axis (X), and
wherein each retaining element (16, 116) has a projection (26, 126) extending radially inwards when connected to the receiving element (12, 112),
**characterised in that** a portion of the projection (26, 126) extending furthest radially inwards extends further radially inwards than a portion extending furthest radially inwards of an inner wall of the receiving space (22) into which the projection (26, 126) extends, but is disposed further radially outwards than a portion extending furthest radially inwards of an inner wall of a through-hole (34) of the securing element (14, 114) through which the insertion element (18, 118) is passed when the insertion element (18, 118) is connected to the receiving element (12, 112).

2. Coupling (10, 110) according to claim 1,
**characterised in that** the insertion element (18, 118) is adapted to displace the at least one retaining element (16, 116) radially outwards at least partially when the insertion element (18, 118) is inserted into the receiving space (22) of the receiving element (12, 112).

3. Coupling (10, 110) according to claim 1 or 2,
**characterised in that** the displacement axis (Y) of the securing element (14, 114) is substantially perpendicular to the insertion axis (X) of the insertion element (18, 118).

4. Coupling (10) according to any one of claims 1 to 3,
**characterised in that** the securing element (14) is adapted to be transferable from a state separated from the receiving element (12) into the receiving element (12) provided with the at least one retaining element (16) into the release position (P1), the securing element (14) being further adapted to displace the at least one retaining element (16) over an insertion slope provided on the securing element (14).

5. Coupling (10, 110) according to any one of claims 1 to 4,
**characterised in that** two retaining arms (24, 124), in particular diametrically opposed with respect to a longitudinal central axis (X) of the receiving element (12, 112), are provided, said retaining arms advantageously being disposed on a common support element.

6. Coupling (10, 110) according to any one of claims 1 to 5,
**characterised in that** the at least one retaining element (16, 116) is connectable to the receiving element (12, 112) parallel to the insertion axis (X).

7. Coupling (110) according to any one of claims 1 to 6,
**characterised in that,** in a state in which the securing element (114) is disposed on the receiving element (112), in particular in the locking position (P2), a free space (172) is disposed between a portion of the securing element (114) and a portion (170) of the receiving element (112) adj acent thereto in a direction parallel to the insertion axis (X), which free space is suitable for the insertion of a tool in order to displace the securing element (114) from the locking position (P2) into the release position (P1), the portion of the securing element (114) adjacent to the free space (172) having a recess (174) in particular facing the free space (172), which recess is adapted to receive the tool.

8. Coupling (10) according to any one of claims 1 to 7,
**characterised in that,** for each retaining element (16), the securing element (14) has a recess (36) disposed radially outwards on the securing element (14) that is adapted to engage a respective retaining element (16) in the release position (P1) of the securing element (14), such that displacement of the securing element (14) along the displacement axis (Y) of the securing element (14) in either direction is substantially prevented.

9. Coupling (10, 110) according to any one of claims 1 to 8,
**characterised in that** the insertion element (18, 118) has a portion (46, 146) on its outer circumference in which the outer diameter of the insertion element (18, 118) changes, the securing element (14, 114) further comprising a securing portion (50, 150) which is adapted to engage with the portion of the insertion element (18, 118) with changed outer diameter in the locking position (P2) of the securing element (14, 114), in order to prevent axial displacement of the insertion element (18, 118) in at least one direction, preferably a release direction of the insertion element (18, 118) and the receiving element (12, 112), along the insertion axis (X).

10. Coupling (10, 110) according to any one of claims 1 to 9,
**characterised in that** the coupling (10, 110) further comprises a latching device (38, 138) acting between the receiving element (12, 112) and the securing element (14, 114).

11. Coupling (10, 110) according to any one of claims 1 to 10,
**characterised in that** the receiving space (22) of the receiving element (12, 112) is divided into a first receiving space (22a) and a second receiving space (22b), the securing element (14, 114) being disposed between the first (22a) and second (22b) receiving spaces in the locking position (P2) and the release position (P1), viewed in a direction along the insertion axis (X).

12. Coupling (10, 110) according to claim 11,
**characterised in that** a smallest radial distance (r3) from a portion of the securing element (14, 114) in the release position (P1) to an extended longitudinal central axis (X) of the second receiving space (22b) is greater than or equal to a smallest radial distance (r2) from a portion of an inner wall of the second receiving space (22b) to the longitudinal central axis (X) of the second receiving space (22b), but a smallest radial distance (r2) from a portion of the securing element (14, 114) in the release position (P1) to an extended longitudinal central axis (X) of the first receiving space (22a) is smaller than or equal to a smallest radial distance (r1) from a portion of an inner wall of the first receiving space (22a) to the longitudinal central axis (X) of the first receiving space (22a).

## Revendications

1. Accouplement (10, 110), comprenant
un élément femelle (12, 112),
un élément de blocage (14, 114),
au moins un élément de retenue (16, 116) formé séparément de l'élément de blocage (14, 114), et
un élément mâle (18, 118),
dans lequel
l'élément mâle (18, 118) peut être inséré dans un espace de réception (22) de l'élément femelle (12, 112) le long d'un axe d'insertion (X),
l'élément de blocage (14, 114) est conçu pour être déplaçable le long d'un axe de déplacement (Y) entre une position de libération (P1) et une position de verrouillage (P2),
l'élément de blocage (14, 114) est conçu pour être en prise avec ledit au moins un élément de retenue (16, 116) dans sa position de libération (P1), l'élément mâle (18, 118) n'étant pas inséré dans l'espace de réception (22) de l'élément femelle (12, 112), de telle sorte qu'un déplacement de l'élément de blocage (14, 114) de la position de libération (P1) en direction de la position de verrouillage (P2) est empêché,
l'élément mâle (18, 118) est conçu pour, lors de l'insertion de l'élément mâle (18, 118) dans l'espace de réception (22) de l'élément femelle (12, 112), interagir avec ledit au moins un élément de retenue (16, 116) de manière à permettre un déplacement de l'élément de blocage (14, 114) de la position de libération (P1) vers la position de verrouillage (P2),
chaque élément de retenue (16, 116) comprend un bras de retenue (24, 124) qui s'étend parallèlement à l'axe d'insertion (X) et qui a un effet élastique dans une direction radiale par rapport à l'axe d'insertion (X),
et, à l'état relié à l'élément femelle (12, 112), chaque élément de retenue (16, 116) comprend une saillie (26, 126) qui s'étend radialement vers l'intérieur,
**caractérisé en ce qu'**une partie de la saillie (26, 126) s'étendant le plus radialement vers l'intérieur s'étend radialement plus vers l'intérieur qu'une partie, s'étendant le plus radialement vers l'intérieur, d'une paroi intérieure de l'espace de réception (22) dans lequel s'étend la saillie (26, 126), mais est située radialement plus à l'extérieur qu'une partie, s'étendant le plus radialement vers l'intérieur, d'une paroi intérieure d'un trou de passage (34) de l'élément de blocage (14, 114), à travers lequel l'élément mâle (18, 118) est passé lors de la connexion de l'élément mâle (18, 118) à l'élément femelle (12, 112).

2. Accouplement (10, 110) selon la revendication 1,
**caractérisé en ce que** l'élément mâle (18, 118) est conçu pour déplacer au moins localement ledit au moins un élément de retenue (16, 116) radialement vers l'extérieur, lors de l'insertion de l'élément mâle (18, 118) dans l'espace de réception (22) de l'élément femelle (12, 112).

3. Accouplement (10, 110) selon la revendication 1 ou 2,
**caractérisé en ce que** l'axe de déplacement (Y) de l'élément de blocage (14, 114) est sensiblement perpendiculaire à l'axe d'insertion (X) de l'élément mâle (18, 118).

4. Accouplement (10) selon l'une des revendications 1 à 3,
**caractérisé en ce que** l'élément de blocage (14) est conçu pour pouvoir être transféré d'un état séparé de l'élément femelle (22), dans l'élément femelle (12) pourvu dudit au moins un élément de retenue (16), jusque dans la position de libération (P1), l'élément de blocage (14) étant en outre conçu pour déplacer ledit au moins un élément de retenue (16) par l'intermédiaire d'une rampe d'insertion prévue sur l'élément de blocage (14).

5. Accouplement (10, 110) selon l'une des revendications 1 à 4,
**caractérisé en ce qu'**il est prévu deux bras de retenue (24, 124) en particulier diamétralement opposés par rapport à un axe central longitudinal (X) de l'élément femelle (12, 112), qui sont avantageusement disposés sur un élément de support commun.

6. Accouplement (10, 110) selon l'une des revendications 1 à 5,
**caractérisé en ce que** ledit au moins un élément de retenue (16, 116) peut être relié à l'élément femelle (12, 112) parallèlement à l'axe d'insertion (X).

7. Accouplement (110) selon l'une des revendications 1 à 6,
**caractérisé en ce que**, dans un état dans lequel l'élément de blocage (114) est disposé sur l'élément femelle (112), en particulier dans la position de verrouillage (P2), un espace libre (172) est disposé entre une partie de l'élément de blocage (114) et une partie (170) de l'élément femelle (112) adjacente dans une direction parallèle à l'axe d'insertion (X), qui convient pour l'insertion d'un outil afin de déplacer l'élément de blocage (114) de la position de verrouillage (P2) jusque dans la position de libération (P1), la partie de l'élément de blocage (114) adjacente à l'espace libre (172) présentant en particulier un évidement (174) orienté vers l'espace libre (172), qui est conçu pour recevoir l'outil.

8. Accouplement (10) selon l'une des revendications 1 à 7,
**caractérisé en ce que** l'élément de blocage (14) présente, pour chaque élément de retenue (16), un évidement (36) disposé radialement à l'extérieur sur l'élément de blocage (14), lequel est conçu pour, dans la position de libération (P1) de l'élément de blocage (14), venir en prise avec l'élément de retenue (16) respectif de telle sorte qu'un déplacement de l'élément de blocage (14) le long de l'axe de déplacement (Y) de l'élément de blocage (14) est sensiblement empêché dans les deux directions.

9. Accouplement (10, 110) selon l'une des revendications 1 à 8,
**caractérisé en ce que** l'élément mâle (18, 118) comporte, sur sa périphérie extérieure, une partie (46, 146) dans laquelle le diamètre extérieur de l'élément mâle (18, 118) varie, l'élément de blocage (14, 114) comprenant en outre une partie de blocage (50, 150) qui est conçue pour, dans la position de verrouillage (P2) de l'élément de blocage (14, 114), s'engager avec la partie de diamètre extérieur modifié de l'élément mâle (18, 118), afin d'empêcher un déplacement axial de l'élément mâle (18, 118) au moins dans une direction, de préférence dans une direction de détachement de l'élément mâle (18, 118) et de l'élément femelle (12, 112), le long de l'axe d'insertion (X).

10. Accouplement (10, 110) selon l'une des revendications 1 à 9,
**caractérisé en ce que** l'accouplement (10, 110) comprend en outre un dispositif d'encliquetage (38, 138) agissant entre l'élément femelle (12, 112) et l'élément de blocage (14, 114).

11. Accouplement (10, 110) selon l'une des revendications 1 à 10,
**caractérisé en ce que** l'espace de réception (22) de l'élément femelle (12, 112) est subdivisé en un premier espace de réception (22a) et en un deuxième espace de réception (22b), l'élément de blocage (14, 114) étant disposé, dans sa position de verrouillage (P2) et sa position de libération (P1), vu dans une direction le long de l'axe d'insertion (X), entre les premier (22a) et deuxième (22b) espaces de réception.

12. Accouplement (10, 110) selon la revendication 11,
**caractérisé en ce qu'**une distance radiale minimale (r3) d'une partie de l'élément de blocage (14, 114) dans sa position de libération (P1) par rapport à un axe central longitudinal (X) prolongé du deuxième espace de réception (22b) est supérieure ou égale à une distance radiale minimale (r2) d'une partie d'une paroi intérieure du deuxième espace de réception (22b) par rapport à l'axe central longitudinal (X) du deuxième espace de réception (22b), mais une distance radiale minimale (r2) d'une partie de l'élément de blocage (14, 114) dans sa position de libération (P1) par rapport à un axe central longitudinal (X) prolongé du premier espace de réception (22a) est inférieure ou égale à une distance radiale minimale (r1) d'une partie d'une paroi intérieure du premier espace de réception (22a) par rapport à l'axe central longitudinal (X) du premier espace de réception (22a).
